Europäisches Patentamt

European Patent Office

Office européen des brevets

(19)

(11) **EP 1 376 437 A1**

(12) **DEMANDE DE BREVET EUROPEEN**

(43) Date de publication:
**02.01.2004 Bulletin 2004/01**

(51) Int Cl.⁷: **G06F 17/60**

(21) Numéro de dépôt: **03100564.8**

(22) Date de dépôt: **07.03.2003**

(84) Etats contractants désignés:
**AT BE BG CH CY CZ DE DK EE ES FI FR GB GR
HU IE IT LI LU MC NL PT SE SI SK TR**
Etats d'extension désignés:
**AL LT LV MK RO**

(30) Priorité: **13.03.2002 FR 0203120**

(71) Demandeur: **Thales
75008 Paris (FR)**

(72) Inventeur: **Jasselin, Philippe, c/o Thales
94117 CX Arcueil (FR)**

(74) Mandataire: **Lucas, Laurent et al
THALES Intellectual Property,
31-33, avenue Aristide Briand
94117 Arcueil Cédex (FR)**

(54) **Procédé de prédiction d'évènements de trafic aérien, notamment pour une aide à la décision des compagnies aériennes et des aéroports**

(57)    La présente invention concerne un procédé de prédiction d'événements de trafic aérienne.

Des moyens d'émission (22, 23, 24, 41, 42, 43) étant répartis sur les sites des acteurs du trafic aérien, des moyens de traitement de l'information (21) communiquant avec ces moyens d'émission par au moins un réseau de communication (25), un événement est prédit par les moyens de traitement en fonction d'informations disséminées sur les différents sites et émises par les moyens d'émission.

L'information s'applique notamment pour optimiser la gestion du trafic aérien, en particulier à l'approche et dans les aéroports.

FIG.2

EP 1 376 437 A1

**Description**

La présente invention concerne un procédé de prédiction d'événements de trafic aérien, en particulier pour une aide à la décision des compagnies aériennes et/ou des aéroports. Elle s'applique notamment pour optimiser la gestion des vols par les compagnies aériennes, la gestion du trafic aérien dans son ensemble et les opérations aéroportuaires.

De nombreux acteurs interviennent dans la gestion du trafic aérien. Ils partagent des ressources communes composées notamment de l'espace aérien et d'une ou plusieurs plates-formes aéroportuaires. Parmi ces acteurs, trois groupes occupent une place essentielle :

- Les contrôles de trafic aérien;
- Les aéroports ;
- Les compagnies aériennes.

Ces groupes ont des tâches et objectifs différents, quelquefois complémentaires mais aussi contradictoires. En particulier les contrôles de trafic doivent assurer la sécurité et la séparation des vols, les compagnies aériennes ont intérêt à assurer la meilleure utilisation possible des avions et les aéroports, outre les aspects de sécurités, cherchent à rentabiliser au maximum leurs installations et plus généralement à accueillir un trafic important.

La gestion des retards est un exemple qui illustre les problèmes rencontrés dans le trafic aérien ou aéroportuaire. L'IATA (International Air Traffic Association) recommande notamment à une compagnie aérienne d'informer l'aéroport d'arrivée si elle prévoit un retard supérieur à 15 minutes. Le message de retard est transmis via un réseau dédié, par téléphone ou par télécopie. L'aéroport d'arrivée ne sait cependant pas toujours à quelle heure l'avion atterrira. Un effet de dominos peut même se produire et créer une accumulation des retards. Une situation classique peut en effet être la suivante : du personnel technique attend à la porte d'arrivée, puis l'avion n'étant toujours pas présent, la porte qui lui était réservée est attribuée à un autre avion ou bien le personnel technique part s'occuper d'un autre vol. Le résultat est que lorsque l'avion arrivera enfin, son infrastructure d'accueil ne sera plus disponible, ce qui entraînera un retard supplémentaire pour les passagers, dans l'attente par exemple d'une nouvelle porte disponible.

En Europe certaines estimations indiquent qu'environ 35% des vols accusent un retard et que le retard moyen est d'environ 20 minutes. Un tel retard moyen a un effet de dominos important, c'est-à-dire que d'autres retards additionnels, notamment les temps de réaction dus à une arrivée tardive de l'avion, vont s'ajouter au retard initial et se cumuler.

Un but de l'invention est notamment de pallier les inconvénients précités. En particulier, un but de l'invention est de permettre une prédiction plus fiable d'événements de vols, tels que par exemple des heures d'arrivée et de départ des avions mais aussi d'autres événements. A cet effet, l'invention a pour objet un procédé de prédiction d'événements de trafic aérien, caractérisé en ce que, des moyens d'émission étant répartis sur les sites des acteurs du trafic aérien, des moyens de traitement de l'information communiquant avec ces moyens d'émission par au moins un réseau de communication, un événement est prédit par les moyens de traitement en fonction d'informations disséminées sur les différents sites et émises par les moyens d'émission.

Avantageusement, une même information Inf.A relative à un événement étant émise par différents moyens d'émission (sous forme de données Inf.A1, ...Inf.Ak, ...Inf.AN) vers les moyens de traitement de l'information, ces moyens affectent un indicateur de qualité aux données reçues Inf.A1, ...Inf.Ak, Inf.AN, la prédiction de l'événement étant fonction de l'indicateur de qualité.

L'invention permet également de redistribuer aux acteurs du trafic aérien une même vision d'une situation donnée et une même prédiction d'événements de trafic aérien. L'invention ne nécessite pas un investissement lourd étant donné en particulier que les moyens de mise en oeuvre peuvent être supportés par des moyens ou infrastructures, notamment de communication, déjà existants.

D'autres caractéristiques et avantages de l'invention apparaîtront à l'aide de la description qui suit faite en regard de dessins annexés qui représentent :

- la figure 1, une illustration de l'environnement opérationnel d'un procédé selon l'invention ;
- la figure 2, un exemple de communications entre les principaux éléments d'un système mettant en oeuvre l'invention ;
- la figure 3, un exemple d'architecture logicielle de moyens de traitements pour la mise en oeuvre de l'invention ;
- la figure 4, une illustration de l'affectation d'un indicateur de qualité sur les données reçues des différents sites.

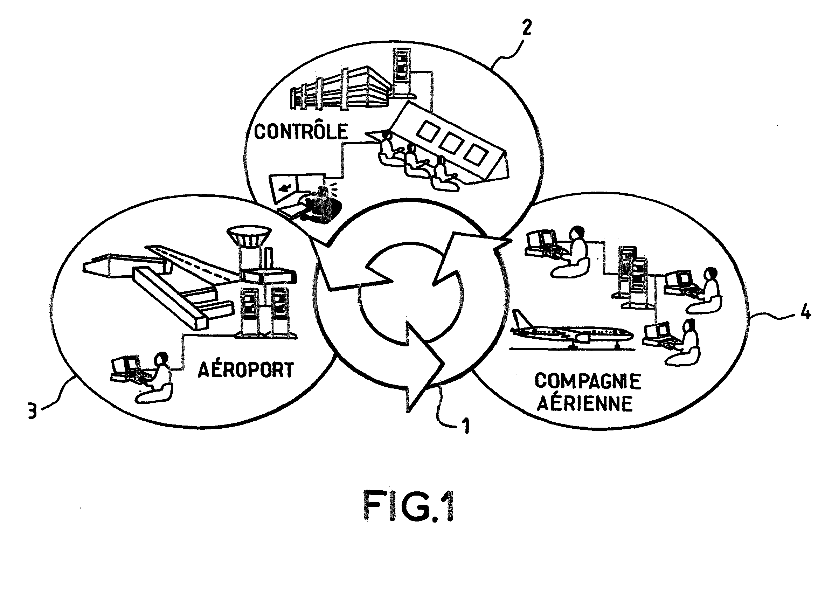

La figure 1 illustre l'environnement opérationnel d'un procédé selon l'invention 1 coopérant avec les différents acteurs 2, 3, 4 du trafic aérien. Un premier acteur 2 est notamment le contrôle aérien. Ce dernier prend en charge un avion lorsque celui-ci est en mouvement au sol ou en vol notamment pendant les phases de roulage, de décollage, de navigation, d'approche et d'atterrissage. Un deuxième acteur 3 est l'aéroport, plus particulièrement l'entité qui est en charge de toute la structure aéroportuaire qui va accueillir l'avion notamment les zones de parking et de transfert des passagers et les personnels associés. Un troisième acteur 4 est la compagnie aérienne englobant notamment le personnel au sol et les membres d'équipage. En particulier le procédé selon l'invention permet la circulation de données entre ces différents acteurs de sorte qu'ils collaborent mieux et plus efficacement. Il permet notamment aux différents acteurs d'avoir une même vision d'une situation donnée. Selon l'invention, un indice de qualité ou de non-qualité accompagne cette vision. Des actions ou décisions appropriées et mieux ciblées peuvent en conséquence être prises par ces acteurs.

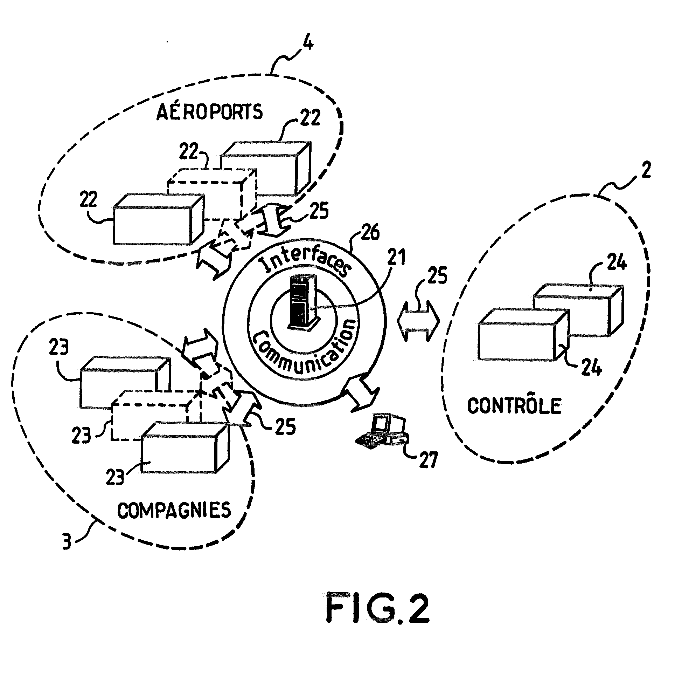

La figure 2 illustre un réseau de communication opérationnel d'un procédé selon l'invention. Un système utilisé comporte des moyens de traitement de l'information couplés à des moyens d'émission et de réception d'informations, avec un ou plusieurs réseaux de communication permettant à ces différentes entités d'échanger des informations et des données. Les moyens d'émission et de réception des informations sont répartis sur les sites des différents acteurs. Ainsi, un système mettant en oeuvre l'invention comporte un ou plusieurs serveurs et de multiples moyens d'émission. En particulier, les moyens d'émission sont par exemple des mécanismes d'extraction des données ou des postes clients. Un exemple de configuration utilise un serveur 21 et des postes clients 22, 23, 24 installés sur les sites des différents acteurs. Ainsi, des postes et moyens d'émission 22 sont installés sur les sites des aéroports, des postes ou moyens d'émission 23 sont installés sur des sites des compagnies aériennes et des postes ou moyens d'émission 24 sont installés sur le site de contrôle de trafic aérien. Les communications 25 entre le ou les serveurs et les postes clients se font par exemple par des liaisons du type Internet ou X25. A cet effet, le serveur comporte des couches logicielles de communication et d'interface 26 pour décoder et gérer les échanges de données. Un ou plusieurs postes 27, en liaison avec le serveur, sont par exemple dédiés à l'administration du système. Pour des raisons de sécurité et de fiabilité, chaque serveur est par exemple doublé avec un serveur redondant. L'accès aux services du système se fait par exemple par l'intermédiaire d'interfaces graphiques homme-machine. Les postes clients peuvent notamment fonctionner sur des plate-formes standards du commerce et l'accès peut alors par exemple se faire au moyen de logiciels de navigation Internet du commerce.

En phase d'opération et notamment durant les phases de départ, d'arrivée et d'escale de l'avion, il est généralement difficile de planifier les opérations, en particulier pour les compagnies aériennes et les aéroports, en raison notamment du grand nombre et de la grande variété d'informations disponibles. A titre d'exemple, de multiples estimations sont constamment créées par les différents acteurs 2, 3, 4 avant, pendant et après chaque phase de vol. Ces multiples estimations concernent par exemple l'heure d'arrivée et de départ de l'avion Ces données estimées seront respectivement appelées par la suite ETA, selon l'expression anglo-saxonne usuelle « Estimated Time of Arrival », et EOBT, selon l'expression anglo-saxonne « Estimated Off Bock Time ». De plus, la mise à jour des différentes estimations n'est pas synchronisée et la qualité des informations est difficile à estimer, ce qui réduit considérablement les possibilités pour les personnels des compagnies aériennes et des aéroports de les utiliser pour gérer efficacement les effets des retards et des problèmes liés. Des utilisations critiques de données d'estimation de vols sont principalement le fait des équipes de gestion des aéroports et des compagnies aériennes comprenant notamment les responsables d'escales, les planificateurs de vol, les coordinateurs de réseau de lignes aériennes et les gestionnaires de portes et de parking qui ont notamment la responsabilité d'établir les plans d'opérations les plus performants. Un système selon l'invention effectue notamment des opérations de capture, de fusion et de corrélation d'estimées d'opérations et de données relatives au vol provenant des différents aéroports, compagnies aériennes et contrôles de trafic et fournit avantageusement des informations enrichies, et de fait plus sûres et plus fiables.

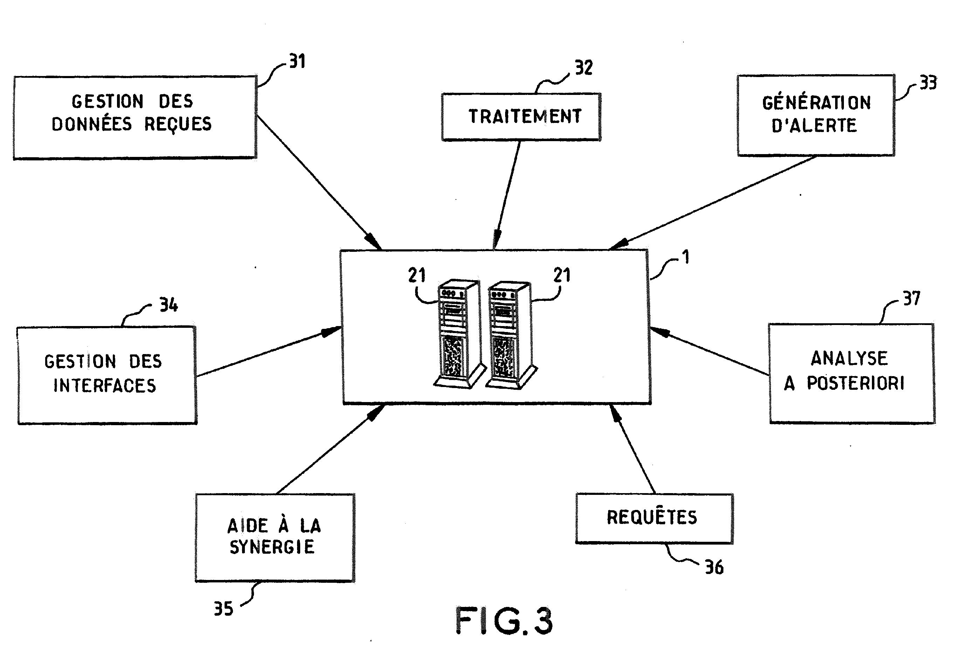

La figure 3 illustre une architecture possible des moyens de traitement de l'information pour la mise en oeuvre du procédé selon l'invention. La figure 3 illustre plus particulièrement une décomposition fonctionnelle des différents blocs possibles de ces moyens de traitement. Il s'agit d'une découpe fonctionnelle, les blocs décrits par la suite étant notamment des fonctions qui peuvent être implémentées sur une même machine ou sur plusieurs machines de traitement de l'information 21.

Un premier bloc 31 gère les flux de données reçues des différents moyens d'émission des acteurs 2, 3, 4. Il comporte à cet effet des interfaces d'entrées et des contrôles de flux de l'information reçue. Il extrait et filtre les données brutes et translate les différents formats de données reçues des moyens d'émission dans un modèle unifié, propre au système. Ces données peuvent également être émises par les postes clients 22, 23, 24 installés sur les plates-formes des acteurs. L'instant d'arrivée de chaque donnée reçue est par exemple mémorisé par ce bloc.

Un deuxième bloc 32 traite les données reçues du bloc 31 qui sont alors analysées par des moyens adaptés. Ces moyens adaptés affectent notamment chaque donnée reçue d'un indicateur de qualité. Cette fonction sera appelée par la suite fonction d'indication de qualité. L'indicateur de qualité est notamment fonction de l'origine des données reçues. Il peut être aussi fonction de l'environnement des vols, en particulier des phases de vol ou de conditions particulières d'exploitation. Ces critères sont alors avantageusement pris en combinaison.

Pour définir un indicateur de qualité, plusieurs catégories de critères peuvent être utilisées, l'indicateur final étant par exemple la combinaison des différents indices. Cet indicateur final peut prendre la forme d'une fonction de pondération. Un premier indice $I_1$ est par exemple fonction des données elles-mêmes. Ainsi, cet indice est lui-même fonction de plusieurs critères. Un critère est par exemple lié à l'âge de la donnée. Plus une donnée est vieille, plus son indice de qualité est faible. Cette décroissance en fonction du temps peut être continue ou varier par paliers. Un autre critère qui influe sur ce premier indice est par exemple la stabilité d'une donnée en fonction du temps. Plus l'information contenue dans une donnée varie en fonction du temps, plus la qualité de cette donnée diminue. Cette stabilité peut être définie par le niveau de variation de la donnée dans un intervalle de temps donné. A titre d'exemple, si on retient les deux critères précédents pour former l'indice $I_1$ propre à une donnée, cet indice peut être défini à un instant t par la relation suivante :

$$I_1 = A(t - t_0) \times S(t) \tag{1}$$

Où :

- $A(t - t_0)$ est une fonction normalisée décroissante en fonction de la durée $t - t_0$, $t_0$ étant l'instant de capture de la donnée mémorisé par ailleurs, comme cela a notamment été indiqué précédemment ;
- $S(t)$ est une fonction qui définit la stabilité de la donnée à l'instant t.

Les fonctions $A(t - t_0)$ et $S(t)$ sont par exemple normalisées de sorte que l'indice $I_1$ soit par exemple compris entre 0 et 1.

Un autre indice $I_2$ qui peut participer à la définition de l'indicateur de qualité prend en compte des critères de niveau global c'est-à-dire notamment les visions de l'ensemble des acteurs pour chaque information. Cet indice $I_2$ est notamment fonction de l'ensemble des données, d'origines différentes, qui définissent une même information. C'est par exemple une fonction de corrélation de ces données. Pour illustrer cet indice, on peut considérer à titre d'exemple la donnée qui indique l'heure d'arrivée d'un vol. La fonction d'indication de qualité analyse les différentes données d'heures d'arrivée fournies par les différents acteurs concernant un vol donné. S'il y a une forte corrélation entre les heures d'arrivées indiquées, la fonction d'indication de qualité attribue alors une forte valeur à l'indice $I_2$. Ainsi cet indice $I_2$ pour une information inf. donnée peut être défini par la relation suivante :

$$I_2 = C[(inf.1), ...(inf.k), ...(inf.N)] \tag{2}$$

Où C est une fonction de corrélation et inf.k, k compris entre 1 et N, est la donnée reçue de l'acteur k pour définir l'information inf., cette information étant par exemple l'heure d'arrivée d'un vol. Si toutes les données inf.1, ... inf.k, ...inf.N sont proches, alors l'indice de qualité attribué à chacune de ces données sera fort. C'est le cas notamment si tous les acteurs indiquent sensiblement la même heure d'arrivée pour un vol donné. Comme l'indice précédent, cet indice $I_2$ est par exemple normalisé.

Un autre indice de qualité $I_3$ peut être utilisé pour prendre en compte la phase de vol, plus généralement l'environnement de vol. Cet indice associe en particulier la phase de vol et l'origine de la donnée. Ainsi, cet indice tient compte du fait que lorsqu'un avion est en phase de vol, sous le contrôle du trafic aérien, c'est le contrôle aérien qui délivre les informations les plus fiables. Au contraire lorsque l'avion est en phase d'escale au sol, les systèmes ou les personnels aéroportuaires de la gestion de l'escale ont les meilleures informations. Une pondération des informations peut alors être réalisée en fonction du couple phase de vol - origine de l'information. Plus particulièrement, l'indice $I_3$ affecté à une donnée est fonction de la phase de vol et de l'origine de cette donnée. Lorsque l'avion est par exemple en phase de vol, d'approche ou d'atterrissage, l'indice $I_3$ d'une information est élevé si cette dernière provient du contrôle aérien et faible si elle provient de l'aéroport de départ. Lorsque l'avion est au sol, l'indice $I_3$ est élevé si l'information provient des systèmes de gestion d'escales de l'aéroport où se trouve l'avion. A titre d'exemple, on peut considérer l'information concernant l'heure d'arrivée estimée ETA.

Globalement, l'indicateur de qualité est la combinaison de tous les indices utilisés. S'il y a trois types d'indice par exemple, cet indicateur I est par exemple défini comme suit :

$$I = I_1 \times I_2 \times I_3 \tag{3}$$

Cet indicateur I est défini à un instant t, il est alors fonction du temps.

En Europe, l'information CTOT concernant le décollage est une donnée fournie par le CFMU (Central Flow Management System) donc fournie par le contrôle aérien. Le serveur d'un système selon l'invention reçoit donc cette information du contrôle aérien. Il reçoit par ailleurs de la compagnie aérienne des données du plan de vol, et particulièrement la durée de vol prévue FT. Le système en déduit alors simplement une donnée d'heure d'arrivée estimée ETA. En appliquant un modèle d'opération et des données aéroport le système en déduit que ETA = CTOT + FT + TR où TR est le temps de roulage à l'aéroport d'arrivée.

De son côté, l'aéroport d'arrivée indique une heure d'arrivée ETA'. Si ETA est différent de ETA' d'une valeur fixée, le procédé selon l'invention détecte une incohérence de données. En considérant l'indicateur de qualité I à partir des indices $I_1$, $I_2$, $I_3$ le composant, le procédé selon l'invention peut estimer quelle est l'information la plus fiable des deux. Pour illustrer ce résultat simplement, on prend en compte l'indice $I_3$ tel que défini précédemment, indépendamment des autres indices $I_1$, $I_2$. En fonction de la phase de vol, le système accordera plus de confiance à l'une ou l'autre donnée. Typiquement, si l'avion est en phase de roulage à l'aéroport de départ il respecte donc le CTOT donné par le CFMU et c'est la donnée ETA qui aura le meilleur indice de qualité et qui sera donc retenue. Bien évidemment, l'indicateur final prend en compte les autres indices $I_1$, $I_2$ qui tiennent compte notamment de la vieillesse de la donnée, de sa stabilité et de sa corrélation entre les différentes sources. Cet exemple montre qu'une information peut-être fournie directement par une source, par la donnée ETA' par exemple. Elle peut être aussi fournie indirectement par une ou plusieurs sources, par exemple par la donnée CTOT fournie par le contrôle aérien, par la donnée FT fournie par la compagnie aérienne et par le temps de roulage prévisionnel donné par l'aéroport d'arrivée pour former ETA.

Dans l'indicateur de qualité des données, peuvent intervenir des critères différents ou supplémentaires à ceux qui viennent d'être mentionnés. En particulier il est possible de faire intervenir des critères liés aux conditions météorologiques ou de régulation de trafic. L'indicateur de qualité peut comporter les indices $I_1$, $I_2$, $I_3$ précités, mais il peut aussi comporter seulement un ou deux de ces indices, comme il peut en comporter d'autres.

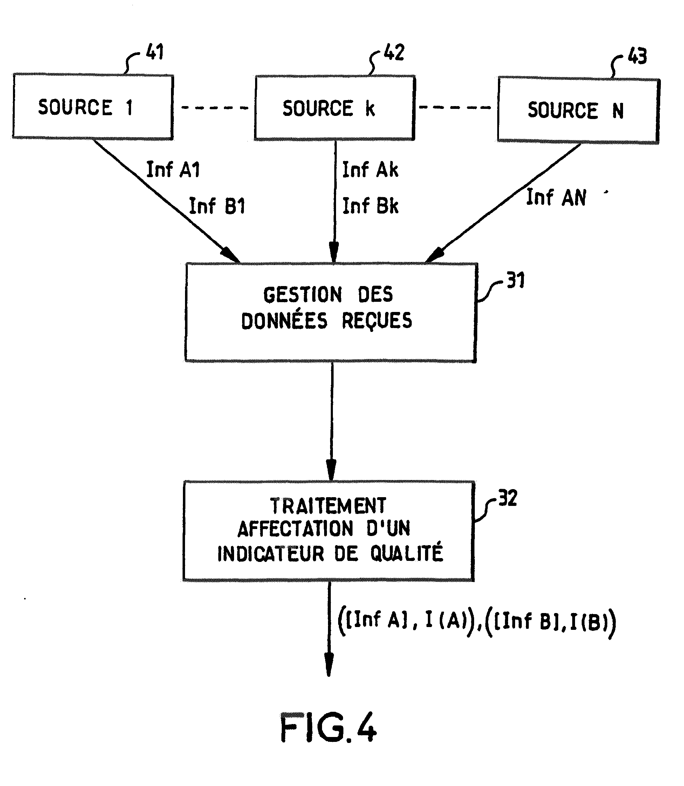

La figure 4 illustre par un synoptique le traitement des données effectué par un procédé selon l'invention depuis leurs origines jusqu'au bloc de traitement 32 précité. Les données, qui véhiculent des informations, proviennent de différentes sources 41, 42, 43, par exemple au nombre de N. Ces sources sont réparties sur les sites des acteurs 2, 3, 4 précités, c'est-à-dire parmi les compagnies aériennes, les aéroports et les organismes de contrôle aérien, sachant qu'on pourrait considérer d'autres acteurs. Ces sources sont par exemple matérialisées par des moyens d'extraction de données, par des moyens d'émission ou par des postes clients 22, 23, 24 implémentés au niveau des sites des acteurs décrits précédemment. A titre d'exemple, la figure 4 illustre les flux de données relatifs à deux informations Inf.A et Inf.B. Inf.A est par exemple un instant de décollage d'un avion et Inf.B un instant d'arrivée, en fait une heure d'arrivée de l'avion à une porte. Ces informations sont fournies par plusieurs sources. Une donnée représentant l'information Inf.A issue de la source k est notée Inf.Ak. De même une donnée représentant l'information Inf.B issue de la source k est notée Inf.Ak. Ces données sont capturées et pré-traitées par le bloc de gestion de données reçues 31 comme indiqué précédemment et le bloc 32 affecte à chaque information Inf.A, Inf.B un indicateur de qualité, respectivement I(A), I(B). L'information Inf.A est par exemple fournie par l'ensemble [Inf.A] = {Inf.A1, ...Inf.Ak, ...Inf.AN} des données reçues représentatives de cette information et provenant des différentes sources 41, 42, 43. Chaque donnée reçue Inf.Ak est accompagnée de son indicateur de qualité, l'ensemble de ces indicateurs $\{I_{A1}, ...I_{Ak}, ...I_{AN}\}$ formant l'indicateur global, composite, I(A) de l'information Inf.A. La fonction qui affecte l'indicateur de qualité détermine par exemple pour chaque donnée reçue Inf.Ak les indices intermédiaires qui le composent $I_1$, $I_2$, $I_3$ tels que définis précédemment. Ces indices intermédiaires forment l'indicateur de qualité $I_{Ak}$ associé à la donnée Inf.Ak. Le processus est le même à partir des données Inf.B1, ...Inf.Bk pour l'information Inf.B. Le bloc de traitement 32 peut alors élaborer des données enrichies ([Inf.A], I(A)), ([Inf.B], I(B)) qui seront distribués aux acteurs 2, 3 et 4 ou seulement à certains de ces acteurs. Le bloc de traitement commande en particulier l'émission des informations vers les différents acteurs, éventuellement en fonction de leurs besoins. A titre d'exemple, il commande l'envoi à l'aéroport et à la compagnie aérienne concernée de l'heure d'atterrissage ou d'arrivée aux portes d'un avion. Cette information fournie dépend notamment des indicateurs de qualité précités.

Plusieurs solutions sont possibles pour prédire une information en fonction des indicateurs de qualité. Dans une première solution, la prédiction retenue pour une information Inf.A est la donnée reçue qui comporte le meilleur indicateur de qualité parmi les données Inf.A1, ...Inf.Ak, ...Inf.AN définissant cette information, par exemple Inf.Ak dans le cas précédent, $I_{Ak}$ étant alors l'indicateur de qualité de plus grande valeur relative. Dans une deuxième solution, les indicateurs de qualités associés à chaque donnée Inf.A1, ...Inf.Ak, ...Inf.AN agissent comme une fonction de pondération. A titre d'exemple, l'information prédite Inf.A peut-être donnée par la relation suivante :

$$\text{Inf.A}^* = I_{A1}.\text{Inf.A1} + ...\ I_{Ak}.\text{Inf.Ak} + ...I_{AN}.\text{Inf.AN} \qquad (4)$$

Inf.A* représente la prédiction de l'information Inf.A. Elle est la sommes des données reçues Inf.A1, ...Inf.Ak, ...Inf.AN pondérée de leurs indicateurs de qualité. Les indicateurs $I_{A1}$, ...$I_{Ak}$, ...$I_{AN}$ sont par exemple normalisés et définis de telle sorte $I_{A1}+ ...I_{Ak}+ ...I_{AN} = 1$. Ces indicateurs forment des coefficients de pondération.

Pour illustrer le traitement opéré par un procédé selon l'invention, on considère à titre d'exemple le cas de l'information ETA, indiquant l'heure d'arrivée d'un vol, évoquée précédemment. Pour simplifier, on considère par ailleurs trois sources d'information, la compagnie aérienne du vol concerné, l'aéroport d'arrivée et le contrôle aérien dont les informations seront respectivement indicées 1, 2 et 3. L'aéroport d'arrivée fournit la donnée $ETA_2$. Le contrôle aérien fournit l'information de décollage $ETOT_3$. La compagnie aérienne fournit le plan de vol et donc la durée de vol $FT_1$. Le bloc de traitement 32 calcule l'indicateur de qualité $I_{A2}$ de la donnée $ETA_2$ conformément aux critères retenus. Il calcule de même les indicateurs de qualité $I_{A1}$, $I_{A3}$ des données $FT_1$ et $ETOT_3$. Cette opération est par exemple répétée plusieurs fois, en particulier au cours du vol. Dans le cas présent l'arrivée du vol est fournie de deux façons, directement par la donnée $ETA_2$ et indirectement par $FT_1$ et $ETOT_3$ puisque $FT_1 + ETOT_3$ donne une autre estimation de l'heure d'arrivée, notée $ETA_{13}$. On peut obtenir un indicateur de qualité $I_{13}$ qui est l'indicateur moyen de $I_{A1}$ et $I_{A3}$. Aux différentes phases du trajet de l'avion, on retiendra $ETA_2$ ou $ETA_{13}$ en fonction de la valeur des indicateurs de qualité $I_{A2}$ et $I_{13}$. Une autre solution peut, conformément à la relation (4) retenir comme heure d'arrivée ETA la prédiction $ETA^* = I_{A2}.ETA_2 + I_{13}.ETA_{13}$. Les indicateurs de qualité $I_{A2}$, $I_{13}$ sont fonction de la phase du vol, avant, pendant ou après. A titre d'exemple, si à un instant t, $I_{A2} = 0,2$ et $I_{13} = 0,8$ et si $ETA_2 = 16$ heures et $ETA_{13} = 16$ h 30, on retiendra comme heure d'arrivée 16 h 30 selon la première solution ou $ETA^*$ selon la deuxième solution, $ETA^*$ étant égale à $0,2 \times 16 + 0.8 \times 16,5 = 16,4$ soit une heure d'arrivée prévue à 16 h 24.

On revient à la figure 3. Un bloc fonctionnel 33 génère par exemple des alarmes. Ces alarmes sont notamment destinées aux différents acteurs du trafic aérien et sont par exemple transmises aux postes clients. Ce bloc prend par exemple en compte les données fournies par le bloc de traitement 32. En cas d'incohérence détectée sur les données reçues, le bloc 33 génère par exemple une alerte à destination des acteurs. Un exemple d'incohérence est par exemple un écart important entre deux données reçues, ce sera par exemple le cas si l'indice $I_2$ défini précédemment est mauvais pour les données Inf.A1, ...Inf.Ak, ...Inf.AN attachées à une même information. La corrélation entre ces données est dans ce cas très faible et la fonction définie à la relation (2) est par exemple inférieure à un seuil donné. Un bloc 34 gère les interfaces, il vérifie notamment que les données émises vers les postes clients sont au bon format en respect avec les protocoles de communication utilisés. Un procédé selon l'invention améliore la synergie entre les différents acteurs du trafic aérien. En particulier il permet un travail collaboratif. Ce résultat est encore amélioré par un bloc 35 qui fournit une aide supplémentaire à la décision collaborative. Ce bloc alimente en particulier les postes clients en texte convivial avec des caractéristiques particulières par exemple pour repérer un vol ou un groupe de vols donnés qui sont par exemples en correspondances. Il peut par ailleurs alimenter des canaux de communication vocaux. Toutes ces données émises permettent notamment aux différents acteurs concernés d'avoir une même vision d'une situation donnée du trafic aérien. Un bloc 36 permet aux différents utilisateurs, depuis les postes clients, de réaliser des requêtes sur l'ensemble ou un sous-ensemble des données traitées par le système, notamment au niveau du ou des serveurs. Une interface de programmation permet notamment aux utilisateurs de réaliser simplement les requêtes sans connaissance approfondie de langage informatique spécialisé, par exemple du type SQL. Un autre bloc 37 permet une analyse a posteriori des situations de trafic qui sont enregistrées et archivées par le système. En particulier, cette fonction permet d'extraire des données archivées et fournit des outils d'analyse statistiques. Des indicateurs statistiques relatifs au trafic aérien ou à la qualité de la collaboration entre les acteurs du trafic aérien peuvent ainsi être envoyés ou édités à l'attention des acteurs. Ce bloc peut par ailleurs fournir un rapport automatique incluant les tendances du trafic aérien, par exemple sur l'évolution des retards ou autres événements du trafic aérien.

La supervision et l'administration du système sont par exemple réalisée au niveau du ou des serveurs 21. Il est notamment prévu plusieurs modes de fonctionnement en plus du mode opérationnel. Ces modes sont par exemple la maintenance, l'arrêt ou le « stand-by ».

Les postes clients ont par exemple accès aux seules données utiles ou critiques. Leurs liaisons au serveur 21 du système est par exemple bidirectionnelles puisque des données peuvent être fournies au serveur par ces mêmes postes clients, un système selon l'invention exploitant judicieusement l'ensemble des informations disséminées parmi les différents acteurs du trafic aérien. L'infrastructure matérielle nécessaire à tous ces échanges peut être standard, c'est le cas notamment des calculateurs et des écrans. Les postes clients peuvent être dédiés à la mise en oeuvre du procédé selon l'invention ou partager leurs ressources avec d'autres postes comportant d'autres applications. Les moyens de communications utilisés entre le ou les serveurs 21 et les postes clients sont compatibles des exigences de performances, de sécurité et de contrôle du trafic aérien. A cet effet, ces moyens de communication incluent les standards technologiques actuels et futurs du transport aérien tels que par exemple les réseaux de type Internet publics sécurisés ou privés ainsi que le standard d'échanges de données XML/ HTTP.

Dans l'exemple de mise en oeuvre de l'invention décrit précédemment, les moyens de traitement qui effectuent la prédiction sont situés au niveau du ou des serveurs 21, c'est-à-dire en fait de façon centralisée. Dans un autre exemple de mise en oeuvre de l'invention, la prédiction des événements peut être réalisée de façon décentralisée, notamment sur les sites des différents acteurs. Le système central, par exemple le serveur 21, délivre alors les informations aux différents acteurs accompagnées de leur indicateur de qualité. Les acteurs peuvent alors traiter ces informations comme ils le souhaitent. A cet effet les moyens de traitement 32 qui calculent la prédiction sont alors implémentés sur les matériels des sites des acteurs. Il n'en reste pas moins que tous les acteurs ont toujours une même vision d'une situation de trafic donnée, cette vision étant définie notamment par le partage des informations affectées par exemple de leurs indicateurs de qualité.

## Revendications

1. Procédé de prédiction d'événements de trafic aérien, **caractérisé en ce que**, des moyens d'émission (22, 23, 24, 41, 42, 43) étant répartis sur les sites des acteurs du trafic aérien, des moyens de traitement de l'information (21, 31) communiquant avec ces moyens d'émission par au moins un réseau de communication (25), un événement est prédit en fonction d'informations disséminées sur les différents sites et émises par les moyens d'émission.

2. Procédé selon la revendication 1, **caractérisé en ce qu'**une même information (Inf.A) relative à un événement étant émise par différents moyens d'émission (22, 23, 24, 41, 42, 43) sous forme de données (Inf.A1, ...Inf.Ak, ...Inf.AN) vers les moyens de traitement de l'information (31), ces moyens affectent un indicateur de qualité aux données reçues (Inf.A1, ...Inf.Ak, ...Inf.AN), la prédiction de l'événement étant fonction de l'indicateur de qualité.

3. Procédé selon la revendication 2, **caractérisé en ce que** l'indicateur de qualité comporte un indice $I_1$ fonction des données elles-mêmes.

4. Procédé selon la revendication 3, **caractérisé en ce que** l'indice $I_1$ est fonction de l'âge de la donnée, plus la donnée étant vieille plus l'indice étant faible.

5. Procédé selon l'une quelconque des revendications 3 ou 4, **caractérisé** en ce l'indice $I_1$ est fonction de la stabilité des données en fonction du temps.

6. Procédé selon l'une quelconque des revendications 2 à 5, **caractérisé en ce que** l'indicateur de qualité comporte un indice $I_2$ fonction de l'ensemble des données (Inf.A1, ...Inf.Ak, ...Inf.AN), d'origines différentes, qui définissent une même information.

7. Procédé selon la revendication 6, **caractérisé en ce que** l'indice $I_2$ est une fonction de corrélation des données (Inf.A1, ...Inf.Ak, ...Inf.AN).

8. Procédé selon l'une quelconque des revendications 2 à 7, **caractérisé en ce que** l'indicateur de qualité comporte un indice $I_3$ fonction de l'environnement de vol.

9. Procédé selon la revendication 8, **caractérisé en ce que** l'indice $I_3$ est fonction de la phase de vol.

10. Procédé selon l'une quelconque des revendications 8 ou 9, **caractérisé en ce que** l'indice $I_3$ est fonction de l'origine des données (Inf.A1, ...Inf.Ak, ...Inf.AN).

11. Procédé selon les revendications 9 et 10, **caractérisé en ce que**, pour une donnée, l'indice $I_3$ est fonction du couple formé des informations phase de vol et origine de la donnée.

12. Procédé selon l'une quelconque des revendications 2 à 11, **caractérisé en ce que** la prédiction retenue pour une information (Inf.A) est la donnée reçue définissant cette information qui comporte le meilleur indicateur de qualité.

13. Procédé selon l'une quelconque des revendications 2 à 11, **caractérisé en ce que** la prédiction retenue pour une information (Inf.A) est la sommes des données reçues (Inf.A1, ...Inf.Ak, ...Inf.AN) définissant cette information pondérée de leurs indicateurs de qualité.

14. Procédé selon l'une quelconque des revendications précédentes, **caractérisé en ce qu'**il une alarme est générée en cas d'incohérence des données reçues (Inf.A1, ...Inf.Ak, ...Inf.AN) relatives à une même information.

15. Procédé selon la revendication 14, **caractérisé** en ce l'alarme est générée en cas de faible corrélation des données reçues.

16. Procédé selon l'une quelconque des revendications précédentes, **caractérisé en ce que** ce que les moyens de traitement sont répartis dans un ou plusieurs serveurs (21).

**17.** Procédé selon l'une quelconque des revendications précédentes, **caractérisé en ce que** les moyens d'émission sont des mécanismes d'extraction des données ou des postes clients (22, 23, 24).

**18.** Procédé selon l'une quelconque des revendications précédentes, **caractérisé en ce que** le réseau de communication est de type Internet.

**19.** Procédé selon la revendication 18, **caractérisé en ce que** les échanges de données se font par le standard XML / HTTP.

**20.** Procédé selon l'une quelconque des revendications précédentes, **caractérisé en ce que** la prédiction est effectuée par les moyens de traitement (21).

**21.** Procédé selon l'une quelconque des revendications 1 à 19, **caractérisé en ce que** la prédiction est décentralisé et effectuée par des moyens de traitement (32) décentralisé au niveau des sites.

FIG.1

COMPAGNIE AÉRIENNE

CONTRÔLE

AÉROPORT

AÉROPORTS 4

22

22

22

25

Interfaces 26

Communication 21

25

23

23

23

COMPAGNIES 3

2

CONTRÔLE

24

24

25

27

FIG.2

GESTION DES
DONNÉES REÇUES

31

TRAITEMENT

32

GÉNÉRATION
D'ALERTE

33

21    21

1

GESTION DES
INTERFACES

34

ANALYSE
A POSTERIORI

37

AIDE À LA
SYNERGIE

35

REQUÊTES

36

FIG.3

EP 1 376 437 A1

SOURCE 1 ⌒41

SOURCE k ⌒42

SOURCE N ⌒43

Inf A1

Inf B1

Inf Ak

Inf Bk

Inf AN

GESTION DES
DONNÉES REÇUES ⌒31

TRAITEMENT
AFFECTATION D'UN
INDICATEUR DE QUALITÉ ⌒32

$\left([Inf\ A], I(A)\right), \left([Inf\ B], I(B)\right)$

# FIG.4

# DECLARATION

**Office européen**

**des brevets**

qui selon la règle 45 de la Convention sur le brevet européen est considerée, aux fins de la procédure ultérieure, comme le rapport de la recherche européenne

**Numéro de la demande**

EP 03 10 0564

| La division de la recherche estime que la présente demande de brevet n'est pas conforme aux dispositions de la CBE au point qu'une recherche significative sur l'état de la technique ne peut être effectuée au regard de toutes les revendications | **CLASSEMENT DE LA DEMANDE** (Int.Cl.7) |
|---|---|
| Raison : | G06F17/60 |

Les revendications concernent un object exclu de la brevetabilité selon l' Art. 52(2) et (3) CBE. Etant donné que les revendications sont formulées de façon à revendiquer de tels objets ou leur réalisation technologique à l'aide de caractéristiques triviales, l'examinateur de recherche n'a pas pu définir de problème technique dont la solution pourrait éventuellement impliquer une activité inventive. Par conséquent il n'était pas possible d'effectuer une recherche significative sur l'état de la technique (Règle 45 CBE et Directives du CBE, Chapitre VIII, 1-6).

L'attention du déposant est attirée sur le fait que, suite à une déclaration conformément à la Règle 45 CBE, une recherche pourrait être effectuée pendant la phase d'examen, à condition que les problèmes ayant conduit à cette déclaration de non-recherche ou de recherche incomplète aient été résolus (voir Directives OEB C-VI, 8.5).

---

-----

EPO FORM 1504 (P04C38)

| Lieu de la recherche | Date | Examinateur |
|---|---|---|
| LA HAYE | 16 septembre 2003 | Papastefanou, E |